# FASCICULE DE BREVET EUROPEEN

(11) **EP 2 035 249 B1**
(45) Date de publication et mention de la délivrance du brevet: **16.04.2014**
(21) Numéro de dépôt: 07730200.8
(22) Date de dépôt: 15.06.2007
(51) Int. Cl.: B60L 3/00, B60L 7/00

(54) **ARCHITECTURE MATÉRIELLE REDONDANTE POUR L'ÉTAGE D'ALIMENTATION BASSE TENSION D'UN SYSTÈME DE FREINAGE D'UN VÉHICULE DONT TOUTES LES ROUES SONT RELIÉES CHACUNE À AU MOINS UNE MACHINE ÉLECTRIQUE ROTATIVE**
REDUNDANTE HARDWARE-ARCHITEKTUR FÜR DIE NIEDERSPANNUNGSVERSORGUNGSSTUFE DES BREMSSYSTEMS EINES FAHRZEUGS, BEI DEM ALLE RÄDER MIT MINDESTENS EINER ELEKTRISCHEN ROTATIONSMASCHINE VERBUNDEN SIND
REDUNDANT HARDWARE ARCHITECTURE FOR THE LOW-VOLTAGE POWER SUPPLY STAGE OF THE BRAKING SYSTEM OF A VEHICLE IN WHICH ALL OF THE WHEELS ARE CONNECTED TO AT LEAST ONE ROTARY ELECTRICAL MACHINE

(30) Priorité: 26.06.2006 FR 0606018
(43) Date de publication de la demande: 18.03.2009
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: BOURQUI, Gérald, CH-1752 Villars-sur-glâne (CH); CUDRE-MAUROUX, Fabrice, CH-1757 Noreaz (CH); LINDA, Jean-Louis, CH-1635 La Tour-de-treme (CH)
(74) Mandataire: Bauvir, Jacques
(86) Numéro de dépôt international: PCT/EP2007/055968
(87) Numéro de publication internationale: WO 2008/000637

(56) Documents cités:
- EP-A2- 1 026 060
- DE-A1- 19 737 871
- FR-A1- 2 850 071
- GB-A- 2 344 799
- US-A- 5 418 437
- US-A1- 2003 030 322
- US-A1- 2006 061 213

## Description

### DOMAINE DE L'INVENTION

La présente invention concerne les véhicules routiers. Elle concerne en particulier les systèmes de freinage d'un véhicule routier à traction électrique.

Les véhicules électriques englobent des véhicules dans lesquels l'énergie électrique nécessaire à leur déplacement est stockée dans des batteries et des véhicules dans lesquels l'énergie électrique est produite à bord, par un moteur thermique entraînant une génératrice ou par une pile à combustible. La traction du véhicule est assurée par un ou des moteurs électriques et le freinage du véhicule est assuré par un système de freinage mécanique conventionnel.

Cependant, une machine électrique étant réversible, elle peut être utilisée aussi en génératrice électrique pendant les phases de freinage du véhicule et dans ce cas elle transforme l'énergie mécanique de freinage en énergie électrique que le véhicule doit absorber, éventuellement par dissipation thermique. Ce mode de fonctionnement est souvent appelé « freinage électrique » ou « freinage en récupération ».

En pratique, les machines électriques fonctionnent en génératrice pour assurer une décélération modérée du véhicule, pour récupérer autant que faire se peut l'énergie et la stocker dans des accumulateurs électriques, ou même pour la dissiper afin d'alléger la sollicitation des freins mécaniques du véhicule. Le freinage principal d'un véhicule est en effet assuré par des freins mécaniques commandés hydrauliquement, en général de façon assistée, et le plus souvent maintenant pourvu d'une fonction anti-blocage couramment désignée par « ABS ». Le freinage est une fonction de sécurité primordiale sur un véhicule. Les freins mécaniques sont de puissance importante, capable d'amener la roue au blocage, l'écrêtage de puissance étant assurée par la fonction anti-blocage, l'écrêtage étant lié à la limite d'adhérence. Pour assurer la sécurité des passagers, le système de freinage d'un véhicule de tourisme est en général capable d'assurer une décélération de l'ordre de 1 « g », g étant l'unité d'accélération dont la valeur « 1 » correspond à la gravité terrestre.

Par ailleurs, dans un véhicule à traction électrique, intégrer la machine électrique dans la roue est une configuration particulièrement intéressante car cela supprime les arbres mécaniques et offre plus de latitudes pour l'architecture générale du véhicule. L'état de la technique connaît plusieurs dispositions d'intégration de moteurs dans les roues. La demande de brevet WO 2003/065546 propose de disposer quatre moteurs transmettant leur couple à la roue au moyen d'un train épicycloïdal. Par la demande de brevet EP 0878332, on connaît une liaison au sol qui intègre à la fois la suspension verticale de la roue à l'intérieur de celle-ci et un moteur rotatif de traction. Il y a un étage de réduction entre la roue et le moteur électrique, celui-ci étant engrené sur une roue dentée coaxiale à la roue. La roue comporte bien entendu un frein à disque afin d'assurer la fonction de freinage de service. En outre, la liaison au sol comporte un pivot afin de permettre de braquer la roue. Toutes les fonctions d'une liaison au sol se trouvent ainsi intégrées dans la roue.

On connaît également les documents suivants :
- la demande de brevet US 5 418 437 concerne un système pour véhicule comprenant quatre moteurs roues, et un contrôleur pilotant les quatre moteurs de manière indépendante,
- la demande de brevet EP 1 026 060 concerne un système de freinage mettant en oeuvre des freins à friction mécanique contrôlés par un système de contrôle électrique,
- la demande de brevet FR 2 850 071 concerne un boitier de distribution d'énergie électrique pour un système de freinage électromécanique de véhicule automobile,
- la demande de brevet US 2003/030322 concerne un système de freinage électrique comprenant plusieurs actionneurs de freinage,
- la demande de brevet US 2006/061213 concerne un système de distribution d'énergie électrique dans un véhicule,
- la demande de brevet DE 197 37 871 concerne un système de motorisation hybride, mettant en oeuvre un moteur thermique et un moteur électrique, et
- la demande de brevet GB 2 344 799 concerne un système de freinage électrique pour véhicule.

L'invention se rapporte aux systèmes de freinage électrique d'un véhicule routier équipé de roues qui sont reliées en rotation chacune à au moins une machine électrique rotative, chaque machine électrique rotative coopérant avec une seule roue. Dans une telle architecture, on peut conférer au freinage électrique un rôle prédominent, tout à la fois en puissance et en contrôle de la stabilité du véhicule (fonctions connues sous les appellations ABS et ESP) puisqu'il est possible de contrôler sélectivement sur chacune des roues le couple à la roue via le pilotage de la ou des machine(s) électrique(s) rotative(s) qui lui est (sont) associée(s). Encore faut-il pour cela que le freinage électrique soit extrêmemenf fiable.

L'objectif de la présente invention est d'améliorer la fiabilité des systèmes de freinage électrique pour les véhicules à traction électrique. En particulier, l'objectif est de proposer une architecture telle qu'il soit possible de supprimer les freins mécaniques et faire assurer la fonction de freinage de service par voie purement électrique.

### BREVE DESCRIPTION DE L'INVENTION

On décrit ci-dessous un système de freinage dans lequel on peut distinguer:
- un étage de puissance dans lequel circule la puissance électrique nécessaire à la traction ainsi que la puissance électrique générée par le freinage électrique,
- un étage d'alimentation électrique basse tension pour alimenter des électroniques de contrôle et de commande des éléments de puissance, et
- un étage de circulation des signaux de commande du freinage du véhicule.

On propose ci-dessous une architecture dans laquelle chacun de ces étages comporte un certain niveau de redondance. Les redondances proposées pour chacun des étages peuvent être utilisées chacune seule, ou en combinaison avec une autre. Bien entendu, on élève le niveau de sécurité en cumulant toutes les redondances proposées.

La présente demande traite en priorité l'étage d'alimentation électrique basse tension pour alimenter des électroniques de contrôle et de commande des éléments de puissance. L'invention propose un système de freinage électrique d'un véhicule routier dont au moins deux roues sont reliées en rotation chacune à au moins une machine électrique rotative, comportant au moins un module électronique de pilotage de roue pilotant la ou les machines électriques d'une même roue, chaque module électronique de pilotage permettant d'imposer sélectivement à la roue considérée un couple de pilotage déterminé en amplitude et en signe, comportant au moins deux sous-systèmes chacun comportant au moins l'un des modules électroniques de pilotage de roue, comportant une ligne électrique centrale, comportant un étage d'alimentation électrique basse tension pour alimenter des électroniques de contrôle et de commande des éléments de puissance, ledit étage d'alimentation électrique basse tension comportant une première alimentation électrique basse tension et au moins une deuxième alimentation électrique basse tension, la première alimentation et la deuxième alimentation étant interconnectées par une ligne électrique basse tension comportant un premier tronçon et un second tronçon, lesdits premier et second tronçons étant reliés par un dispositif de séparation élechique des deux tronçons, capable d'interrompre l'interconnexion sur commande en cas de sous-tension ou de sur-intensité sur l'un d'entre eux, chaque module électronique de pilotage de roue d'un des sous-systèmes étant alimenté par le premier tronçon et chaque module électronique de pilotage de roue de l'autre des sous-systèmes étant alimenté par le second tronçon.

La première alimentation électrique basse tension est par exemple constituée d'un convertisseur de tension branché à la ligne électrique centrale. L'énergie électrique sur cette ligne centrale peut provenir soit d'une source principale, comme par exemple une pile à combustible, soit d'un dispositif de stockage d'énergie électrique, soit de l'énergie de freinage réutilisée en temps réel. On dispose donc aussi d'une redondance des sources d'énergie. La deuxième alimentation est par exemple constituée d'une batterie basse tension, dédiée à cette alimentation électrique en basse tension. Bien entendu, il est possible d'utiliser pour cette seconde source de tension un deuxième convertisseur de tension branché lui aussi sur la ligne centrale ou bien directement sur le banc de stockage.

En outre, au niveau de l'étage de puissance, on utilise plusieurs machines électriques rotatives, au moins deux et de préférence une par roue motrice, ce qui apporte aussi une certaine redondance. De préférence, le système selon l'invention comporte au moins un module électronique de dissipation pour chacun des sous-systèmes, l'un des modules électroniques de dissipation étant alimenté par le premier tronçon et l'autre des modules électroniques de dissipation étant alimenté par le second tronçon. L'installation de dissipation comporte par exemple une résistance électrique de dissipation associée à chacun des modules électroniques de dissipation, afin de toujours offrir une certaine capacité de décélération en cas de panne d'une résistance ou de son module de commande.

Dans une mise en oeuvre pour un véhicule à quatre roues, de préférence, chacune des roues est mécaniquement reliée à sa ou à ses propres machines électriques rotatives, chacun desdits sous-systèmes comportant deux desdites roues. De préférence, chaque sous-système regroupe les roues du véhicule disposées en diagonale aux angles opposés du véhicule. On verra que cette solution offre plus de sécurité que les circuits de freinage hydrauliques doubles utilisés couramment sur les automobiles.

Enfin, l'étage de circulation des signaux de commande du freinage du véhicule est construit autour de deux capteurs reliés mécaniquement, et de préférence séparément, à une commande de freinage à la disposition d'un conducteur, les capteurs étant exploités de façon totalement différente comme expliqué ci-après.

Signalons encore que, de préférence, pour tenir le véhicule immobile, on installe un dispositif de frein mécanique appelé communément frein de parking. Cependant, un tel dispositif n'est pas conçu pour freiner le véhicule mais seulement pour le tenir arrêté, de préférence même sur des pentes très importantes. Ainsi, le système selon l'invention comporte, associé à une roue au moins, un dispositif de freinage mécanique de la roue commandé uniquement par une commande de frein de parking. De préférence, le dispositif de frein de parking est commandé par un actionneur électrique piloté par une unité de commande de freinage qui ne peut être activée que sous un seuil de vitesse longitudinale du véhicule, ledit seuil étant par exemple inférieur à 10 km/h.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 représente schématiquement un système de freinage d'un véhicule à quatre roues, à production d'énergie électrique à bord ;
- la figure 2 est un schéma détaillant le niveau de puissance organisé pour présenter une certaine redondance matérielle ;
- la figure 3 détaille le niveau d'alimentation électrique basse tension des différentes électronique de commande ;
- la figure 4 détaille le niveau des lignes de commande entre les électroniques de commandes des différents éléments et l'unité centrale.

### DESCRIPTION DU MEILLEUR MODE DE REALISATION DE L'INVENTION

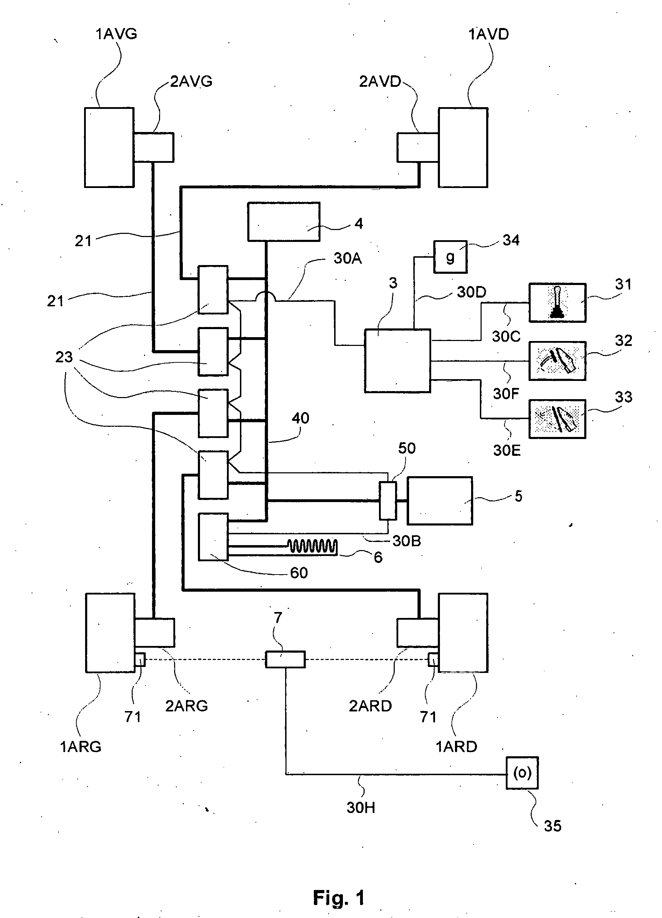

A la figure 1, on a schématisé un véhicule à quatre roues 1_{AvG}, 1_{AvD}, 1_{ArG} et 1_{ArD}. Les roues sont notées 1_{AvG} pour la roue avant gauche, 1_{AvD} pour la roue avant droite, 1_{ArG} pour la roue arrière gauche et 1_{ArD} pour la roue arrière droite. Chaque roue est équipée d'une machine électrique qui lui est couplée mécaniquement. On voit les machines électriques 2_{AvG}, 2_{AvD}, 2_{ArG} et 2_{ArD}. Dans la suite, on ne reprendra pas les indices désignant spécifiquement la position de la roue 1 ou de la machine électrique 2 dans le véhicule lorsque cela n'apporte rien à la clarté de l'exposé. Les machines éclectiques de traction 2 sont des machines synchrones triphasées, équipées d'un capteur de position angulaire de type resolver et sont pilotées par les modules électroniques de pilotage de roue 23 auxquels elles sont reliées par des lignes électriques de puissance 21. Les modules électroniques de pilotage de roue 23 sont conçus pour piloter les machines électriques en couple. De ce fait, les machines électriques peuvent être utilisées en moteur et en génératrice. Chacune des roues arriéres 1_{ArG} et 1_{ArD} est équipée en outre d'un dispositif de freinage mécanique 71 de la roue commandé par un actionneur électrique 7 piloté par une unité de commande de freinage.

Dans une mise en oeuvre particulièrement avantageuse de l'invention, aucune des roues du véhicule ne comporte de frein mécanique de service. Quelle que soit l'amplitude du signal de commande du freinage, c'est-à-dire même pour les freinages les plus intenses, le freinage est assuré par voie électrique, c'est-à-dire en pilotant les machines électriques en génératrice. Chaque roue comporte une ou plusieurs machines électriques dédiées afin de pouvoir générer une force de freinage sélectivement sur chaque roue, ce que l'on ne pourrait pas faire avec une machine électrique commune à plusieurs roues, par exemples les roues d'un essieu, car il y aurait dans ce cas une transmission mécanique et un différentiel entre les roues. Les machines électriques sont dimensionnées de façon appropriée pour imposer à chaque roue la force de freinage la plus élevée possible.

Bien entendu, le système comporte des moyens capables d'absorber une puissance électrique élevée, ce qui par exemple conduit à installer une ou des résistances électriques de dissipation refroidies efficacement, par exemple par circulation d'eau, les accumulateurs électriques connus n'étant pas capables d'absorber la puissance électrique produite par un freinage d'urgence ou n'étant pas capables d'absorber toute l'énergie électrique produite par un freinage de longue durée, sauf à installer une capacité telle que le poids du véhicule serait vraiment prohibitif. Ainsi, l'invention permet de former un système électrique autonome isolé de l'environnement, sans échange d'énergie électrique avec l'extérieur du véhicule, donc applicable aussi aux véhicules automobiles, application des systèmes de freinage électrique beaucoup plus difficile que dans le cas de véhicules reliés à un réseau électrique comme les trains ou les trams urbains.

De nombreuses dispositions sont possibles pour agencer une machine électrique couplée mécaniquement à la roue. Notons cependant que l'on aura avantage à installer une démultiplication assez grande, par exemple au moins égale à 10 et même de préférence supérieure à 15, afin que la machine électrique ne soit pas trop volumineuse. On peut installer une machine électrique de façon coaxiale à la roue, la liaison mécanique étant assuré par un train d'engrenages épicycloïdaux pour disposer de la démultiplication nécessaire. On peut aussi adopter une configuration du genre de celle décrite dans la demande de brevet EP 0878332, de préférence en ajoutant un étage de démultiplication mécanique. On peut aussi choisir de disposer plusieurs machines électriques dont les couples s'additionnent. Dans ce cas, un module électronique de roue peut piloter plusieurs machines électriques en parallèle installées dans une même roue. Au sujet de l'installation de plusieurs machines électriques dans une roue, on consultera par exemple la demande de brevet WO 2003/065546 et la demande de brevet FR 2776966.

L'invention est illustrée dans une application à un véhicule assurant la production d'énergie électrique à bord. On voit une pile à combustible 4 délivrant un courant électrique sur une ligne électrique centrale 40. Bien entendu, tout autre moyen d'alimentation en énergie électrique peut être utilisé, comme par exemple des batteries. On voit aussi un dispositif de stockage d'énergie électrique constitué dans cet exemple par un banc de super condensateurs 5, relié à la ligne électrique centrale 40 par un module électroniques de récupération 50. On voit une résistance électrique de dissipation 6, de préférence plongée dans un liquide caloporteur évacuant les calories vers un échangeur (non représentés), constituant un dispositif d'absorption d'énergie apte à absorber l'énergie électrique produite par l'ensemble des machines électriques au cours d'un freinage. La résistance de dissipation 6 est reliée à la ligne électrique centrale 40 par un module électronique de dissipation 60.

Une unité centrale 3 gère différentes fonctions, parmi lesquelles la chaîne de traction électrique du véhicule. L'unité centrale 3 dialogue avec l'ensemble des modules électroniques de pilotage de roue 23 ainsi qu'avec le module électronique de récupération 50 via les lignes électriques 30A (bus CAN ®). L'unité centrale 3 dialogue aussi avec une commande d'accélération 33 via une ligne électrique 30E, avec une commande de freinage 32 (freins de service) via une ligne électrique 30F, et avec une commande 31 sélectionnant la marche avant ou la marche arrière via une ligne électrique 30C. Cela permet de prendre en compte les intentions du conducteur. L'unité centrale 3 dialogue également avec un capteur d'accélération longitudinale 34 via une ligne électrique 30D. Enfin, le module électronique de récupération 50 dialogue avec le module électronique de dissipation 60 via une ligne électrique 30B.

L'unité centrale 3 assure la gestion du déplacement longitudinal du véhicule. Ladite unité centrale 3 contrôle l'ensemble des modules électronique de pilotage de roue 23. L'unité centrale 3 a un mode de fonctionnement de freinage du véhicule activé par un signal de commande du freinage du véhicule ayant une amplitude donnée représentative de la force totale de freinage souhaitée pour ledit véhicule. En mode freinage, quelle que soit l'amplitude du signal de commande du freinage, ladite unité centrale 3 contrôle l'ensemble des modules électroniques de pilotage de roue 23 de façon à ce que la somme des efforts longitudinaux de l'ensemble des roues 1 provenant des machines électriques rotatives soit une fonction de ladite amplitude du signal de commande du freinage. Autrement dit, il n'y a pas de frein mécanique de service ; le système de freinage électrique décrit ici est le frein de service du véhicule.

On voit aussi une commande de frein de parking 35. L'actionneur 7 du dispositif de freinage mécanique de roue est commandé via une ligne électrique 30H uniquement par cette commande de frein de parking 35, et absolument pas par la commande de freinage 32. De préférence, afin d'éviter toute détérioration des dispositifs de freinage mécanique 71 conçus uniquement pour maintenir immobile le véhicule et dont la capacité d'évacuer des calories est donc très limitée, ladite unité de commande de frein de parking ne peut être activée que sous un seuil de vitesse longitudinale du véhicule assez bas, par exemple inférieur à 10 km/h.

Expliquons le fonctionnement du système selon l'invention.

Lorsque le conducteur sélectionne la marche avant à l'aide de la commande 31 et actionne la pédale d'accélération 33, l'unité centrale 3 ordonne aux modules électroniques de pilotage de roue 23 d'alimenter les machines électriques 2 en puisant l'énergie électrique sur la ligne électrique centrale 40. Celle-ci est alimentée par la pile à combustible 4 et/ou le banc de super condensateurs 5, selon l'état de charge de celui-ci et sous le contrôle de l'unité centrale 3. Le véhicule se déplace en marche avant. Les machines électriques 2 transforment l'énergie électrique en énergie mécanique de traction. La puissance mise en oeuvre dépend en particulier de la position de la commande d'accélération 33.

Lorsque le conducteur actionne la pédale de frein 32, l'unité centrale 3 passe en mode freinage. A partir de l'action du conducteur sur la pédale de frein 32, l'unité centrale 3 calcule une valeur du signal de commande du freinage. Quelle que soit l'amplitude du signal de commande du freinage, ladite unité centrale 3 contrôle l'ensemble des modules électroniques de pilotage de roue 23 de façon à ce que la somme des efforts longitudinaux de l'ensemble des roues 1 soit proportionnelle à ladite amplitude du signal de commande du freinage. Les machines électriques rotatives 2 transforment alors de l'énergie mécanique de rotation en énergie électrique.

Selon la stratégie de gestion de l'énergie électrique programmée dans le module électronique de récupération 50, celui-ci répartit l'énergie de freinage de façon à recharger le banc de super condensateurs 5 et/ou commande le module électronique de dissipation 60 de façon à dissiper l'énergie dans la résistance électrique de dissipation 6. On comprend bien que lorsque les moyens de stockage tels que le banc de super condensateurs 5 sont saturés, la totalité de l'énergie doit être dissipée. De plus, la puissance des moyens de stockage peut être limitée, c'est à dire que la vitesse de charge des moyens de stockage peut par exemple correspondre à un freinage léger comme il est couramment attendu de la part d'un moteur thermique (ce qu'on appelle le « frein moteur »). Au-delà de ce niveau de freinage, la puissance électrique produite est alors dirigée vers les moyens de dissipation.

Afin d'assurer la sécurité de fonctionnement du véhicule, la résistance électrique de dissipation 6 est dimensionnée et refroidie de façon à ce que la totalité de l'énergie électrique produite en manoeuvres de freinage d'urgence, les plus violentes, puisse être dissipée. En fait, il convient de dimensionner la chaîne constituée par les machines électriques rotatives 2, les modules électroniques de pilotage de roue 23, la ligne électrique centrale 40, le module électronique de dissipation 60 et la résistance électrique de dissipation 6 selon des critères de même sévérité que ce que l'on applique aux systèmes de freinage mécanique.

De préférence, l'ensemble des résistances électriques de dissipation 6 forme un dispositif d'absorption d'énergie de puissance supérieure à 500 kW par tonne de véhicule. En effet, si F est la force appliquée au véhicule pour le freiner, si sa masse vaut M kg et sa vitesse vaut V m/sec et si γ est l'accélération en m/sec2, on a F = M * γ et P = F * V = M * (γ * V) ; en posant que la décélération maximale vaut 1 g, à 130 km/h, la puissance par tonne de véhicule vaut environ 350 kW et elle vaut environ 500 kW à 160 km/h. L'homme du métier dimensionnera aisément la puissance du dispositif d'absorption d'énergie en fonction des caractéristiques du véhicule qu'il veut construire.

Ainsi, comme dans l'exemple illustrant l'invention, il y a deux sous-systèmes ayant chacun une résistance électrique de dissipation, chacune de ces résistances électriques de dissipation 6A et 6B est de puissance supérieure à 250*M/1000 kW.

Lorsque le conducteur sélectionne la marche arrière, l'unité centrale 3 ordonne aux modules électroniques de pilotage de roue 23 d'inverser le fonctionnement des machines électriques rotatives 2, y compris en cas de freinage.

Décrivons maintenant comment on peut implanter une fonction anti-blocage de roue.

Les machines électriques de traction 2 étant équipées d'un capteur de position angulaire de type résolver, chaque roue 1 ayant sa propre machine électrique rotative 2, on dispose ainsi d'un capteur de vitesse de rotation de chaque roue. On peut donc avantageusement équiper le système selon l'invention d'un dispositif de contrôle du glissement de chaque roue dans lequel, en mode freinage (ou même dès que le conducteur lève le pied de la pédale d'accélérateur pour provoquer ce qu'il est convenu d'appeler un frein moteur), le couple de pilotage d'une roue est diminué lorsque le dispositif de contrôle du glissement détecte un glissement de la roue considérée. On peut par exemple analyser en temps réel le signal que le capteur de vitesse de rotation de chaque roue délivre et déduire d'une forte variation (décélération) une amorce de blocage. On peut calculer en temps réel la dérivée du signal de vitesse de rotation de chaque roue, obtenir ainsi un signal représentatif de l'accélérationdécélération de chaque roue et comparer ce dernier à un signal donnant l'accélération/décélération réelle du véhicule si l'on dispose d'un capteur approprié. C'est le capteur d'accélération longitudinale 34 déjà introduit plus haut, ou c'est le fait d'un traitement de plusieurs signaux permettant d'estimer l'accélération/décélération réelle du véhicule. Dès lors, l'unité centrale 3 peut ordonner aux modules électroniques de pilotage de roue 23 de diminuer le couple de pilotage de roue (sélectivement par roue) lorsque le dispositif de contrôle du glissement détecte un glissement de la roue considérée. Notons que cette diminution de couple peut être gérée directement par les modules électroniques de pilotage de roue qui peuvent réagir en temps réel par rapport aux vitesse et accélération mesurées sur la roue, l'unité centrale transmettant par exemple des consignes de vitesse et d'accélération limite à respecter.

En conclusion, signalons que l'absence d'organe de freinage conventionnel (voir disque et pince dans la demande EP 0878332) simplifie substantiellement non seulement l'architecture du véhicule équipé d'un système selon l'invention, mais également son entretien en éliminant les opérations périodiques de remplacement des plaquettes et des disques. Parmi les avantages de la suppression des organes de freinage hydraulique conventionnels, on peut citer en outre l'élimination de tout frottement résiduel des plaquettes (on sait que ces frottements consomment une part non négligeable de l'énergie nécessaire au fonctionnement d'un véhicule à freinage conventionnel). On peut également citer comme avantage la suppression des contraintes thermiques induites sur la liaison au sol par les organes de freinage hydraulique conventionnels et l'élimination des nuisances liées aux poussières produites par l'usure des plaquettes et des disques.

On a décrit ci-dessus un système de traction pour véhicule automobile dans lequel aucune des roues n'est équipée de freins mécaniques. La capacité de décélération du véhicule provient du pilotage de machines électriques rotatives en génératrice et celles-ci sont dimensionnées de façon à pouvoir amener chacune des roues du véhicule au blocage, c'est-à-dire qu'elles sont capables de fournir un couple freineur suffisamment important.

La suite de la description illustre un exemple particulier, non limitatif, permettant de construire un système présentant une redondance matérielle suffisante pour pouvoir assurer un très haut niveau de sécurité au système de freinage du véhicule.

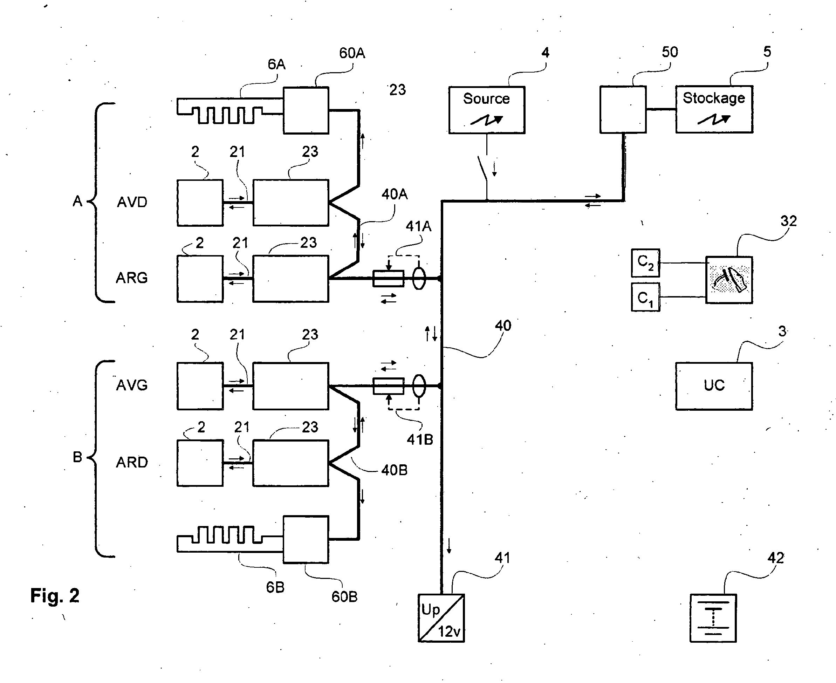

On voit à la figure 2 que le système de freinage électrique comporte deux sous-systèmes (A et B) connectés à la ligne électrique centrale 40, chacun des sous-systèmes comporte deux roues reliées en rotation chacune à au moins une machine électrique rotative 2 qui lui est propre. La roue avant droite et la roue arrière gauche, ou plus exactement les machines électriques rotatives 2 et les modules électroniques de pilotage de roue 23 qui leur sont associées forment le sous-système A. La roue avant gauche et la roue arrière droite, ou plus exactement les machines électriques rotatives 2 et les modules électroniques de pilotage de roue 23 qui leur sont associées forment le sous-système B. Chaque sous-système comporte une résistance électrique de dissipation 6A, respectivement 6B, chacune alimentée par un module électronique de dissipation 60A, respectivement 60B.

Si l'on examine les différents éléments constitutifs du système de traction au regard du critère de redondance matérielle, les machines électriques rotatives 2 intégrées aux roues forment un système qui présente naturellement une redondance puisque chacune des roues dispose de sa propre machine électrique. L'électronique de commande de ces machines, à savoir les modules électroniques de pilotage de roue 23, forme également un système qui présente une redondance matérielle puisque chacune de ces machines électriques 2 dispose de sa propre électronique de commande.

En freinage récupératif, chacune des machines électriques rotatives 2 fournit sur la ligne électrique de puissance 40 de l'énergie électrique via les modules électroniques de pilotage de roue 23. Cette énergie peut être soit stockée dans des accumulateurs comme le banc de super condensateurs 5 ou être dissipée par les résistances électriques de puissance 6A et 6B. En freinage d'urgence, il est évident que l'on ne peut pas tabler sur la capacité de stockage des accumulateurs car ceux-ci pourraient très bien être déjà à leur charge maximale et incapables d'absorber de l'énergie électrique. Dès lors, la résistance électrique 6 est un organe crucial pour la sécurité de fonctionnement. De même, la ligne électrique de puissance 40 est un élément crucial pour la sécurité de fonctionnement du système de freinage du véhicule par voie toute électrique. On examinera ci-dessous différents scénarii de défaillance.

A la figure 2, on reconnaît la source d'énergie électrique principale qui, dans cet exemple de réalisation, est une pile à combustible 4. On voit également la batterie d'accumulateurs permettant de stocker de l'énergie électrique qui, dans cet exemple de réalisation, est un banc de super condensateurs 5 et son module électronique de récupération 50. Enfin, l'alimentation électrique basse tension des différents modules électroniques est assurée d'une part par un convertisseur de tension 41 permettant de convertir la tension disponible sur la ligne électrique de puissance 40 en basse tension (par exemple 12 volts) utilisée pour alimenter les différentes électroniques de commande, et d'autre part par une batterie 42 telle qu'une batterie utilisée classiquement sur un véhicule en tension de 12 volts continus.

On a vu que, afin d'assurer la sécurité du freinage, le système de freinage est organisé en deux sous-systèmes, à savoir le système A regroupant la roue avant droite et la roue arrière gauche et le système B regroupant la roue avant gauche et la roue arrière droite. Le sous-système A est branché sur la ligne de puissance 40 via un dispositif de protection contre les surintensités 41A. Le sous-système B est branché sur la ligne de puissance 40 via un dispositif de protection contre les surintensités 41B. Chacun des sous-systèmes comporte donc sa propre résistance de dissipation 6A, 6B et chacune dispose de sa propre électronique de commande 60A, 60B, et est branché à la ligne de puissance 40 via un dispositif de protection contre les surintensités 41A, 41B capable d'isoler électriquement ledit sous-sytème de la ligne électrique centrale. Du côté opposé à la ligne de puissance 40, en aval du dispositif 41A, un tronçon 40A de ligne électrique de puissance est connecté au module électronique de pilotage de roue 23 associé à la roue arrière gauche, au module électronique de pilotage de roue 23 associé à la roue avant droite et enfin au module électronique de dissipation 60A associé à la résistance de dissipation 6A. De même, pour le sous-système B.

En cas d'avarie sur la ligne de puissance 40 provoquant une coupure entre les points de connexion des dispositifs de protection contre les surintensités 41A et 41B, il reste deux sous-systèmes indépendants l'un de l'autre, les systèmes A et B, chacun capable d'assurer un freinage électrique du véhicule. Chacun de ces sous-systèmes dispose de sa propre résistance électrique de dissipation. On a donc une redondance matérielle de l'étage de puissance.

L'étage de puissance peut présenter d'autres avaries qu'une avarie sur la ligne de puissance 40. Imaginons par exemple que le tronçon de la ligne de puissance 40A aboutissant au module électronique de dissipation 60A soit interrompu. Dans ce cas, la résistance de dissipation 6A est hors circuit. La puissance électrique produite par le sous-système A en freinage électrique peut transiter par la section de la ligne électrique de puissance 40A non interrompue et, via le dispositif de protection contre les surintensités 41A, remonter sur la ligne de puissance 40 et être acheminée, via la ligne de puissance 40B, vers la résistance électrique de dissipation 6B. La résistance électrique de dissipation 6B devient donc commune, dans ce cas-là, au sous-système A et au sous-système B.

Même si la puissance électrique de dissipation disponible est divisée par deux, dans ce cas précis, la capacité de ralentissement du système de freinage électrique reste importante, suffisante pour assurer un freinage d'urgence. En effet, chacune des résistances électriques de dissipation 6 est plongée dans un circuit hydraulique de refroidissement. En cas de freinage d'urgence, l'énergie produite par le freinage électrique est suffisante pour porter le fluide de refroidissement à ébullition. Il n'empêche, au fur et à mesure de sa transformation en phase vapeur, le fluide vaporisé est immédiatement remplacé par du fluide de refroidissement en phase liquide, qui lèche à nouveau la résistance et le système continue de présenter une certaine capacité à évacuer des calories. De plus, le système de refroidissement a une certaine inertie thermique. Les expérimentations du déposant ont démontré que, même dans ce cas de figure, le système de freinage électrique reste bien plus puissant et efficace qu'un système de freinage hydraulique en croix tel que ceux qui équipent les véhicules automobiles à l'heure actuelle.

Si la ligne électrique de puissance 40A est interrompue entre le module électronique de pilotage de roue 23 associée à la roue avant droite et le module électronique de pilotage de roue 23 associée à la roue arrière gauche, alors dans ce cas la résistance électrique de dissipation 6A reste disponible pour la machine électrique rotative 2 associée à la roue avant droite lorsqu'elle fonctionne en génératrice alors que la résistance électrique de dissipation 6B est disponible pour le sous-système B et pour la machine électrique rotative 2 associée à la roue arrière gauche, c'est-à-dire l'une des machines électriques rotatives 2 du sous-système A. L'une 6B des résistances électriques de dissipation va recevoir une puissance électrique plus élevée que l'autre 6A. Le fonctionnement n'est pas optimal mais on se trouve donc dans une configuration moins pénalisante pour la capacité de ralentissement du véhicule que celle exposée au paragraphe précédent.

Si, pour une raison quelconque, une avarie provoque l'ouverture du dispositif de protection contre les surintensités 41 A, isolant ainsi le sous-système A, alors là aussi les capacités de freinage du véhicule restent maximales car les résistances électriques de dissipation sont dimensionnées de façon à pouvoir assurer, globalement, la pleine décélération du véhicule même lorsque l'accumulateur d'énergie électrique, constitué ici par le banc de super condensateurs 5, est à sa charge maximale. Dans ce cas, on n'est donc pas dans une situation de défaillance du système de freinage électrique quant à la capacité maximale de décélération. Certes l'on n'est pas dans une situation optimale quant à la gestion générale puisque notamment la possibilité de récupérer de l'énergie est perdue, mais ceci n'est pas préjudiciable à la sécurité.

Si l'une quelconques des défaillances qui viennent d'être expliquées pour le sous-système A surviennent au sous-système B, pour des raisons de symétrie, les conditions de sécurité du freinage électrique restent strictement identiques. En conclusion, en organisant l'étage de puissance en deux sous-systèmes indépendants, le système A et le système B, chacun relié à la ligne électrique de puissance 40 centrale du véhicule par son propre dispositif de protection contre les surintensités (dispositifs 41A et 41B) et en équipant chacun des sous-systèmes de sa propre résistance électrique de dissipation, on a organisé une redondance matérielle double telle que l'on peut assurer le freinage électrique du véhicule dans d'excellentes conditions de sécurité.

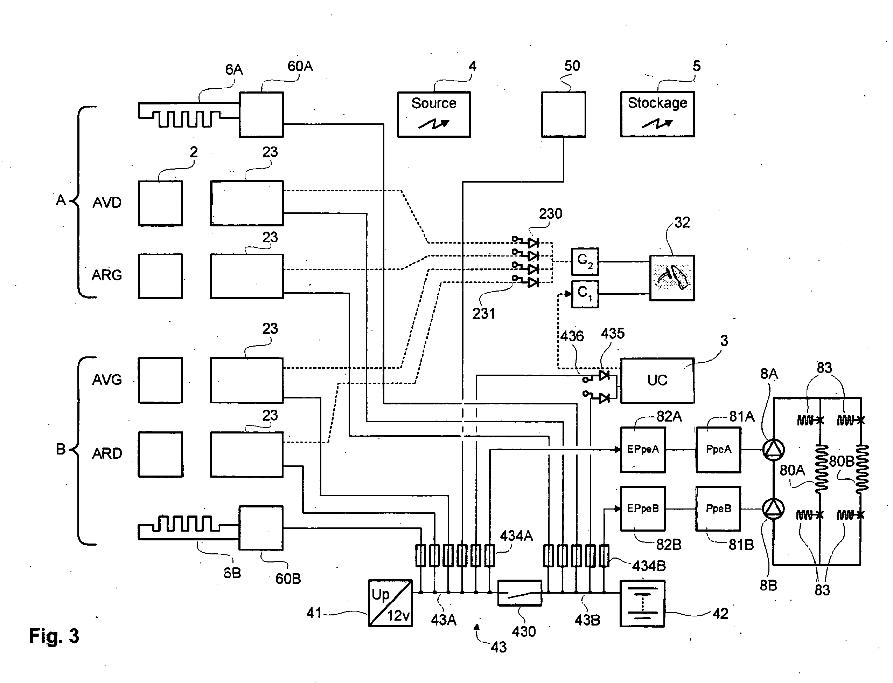

La puissance de dissipation des résistances électriques de dissipation 6A et 6B dépend du bon fonctionnement du système de refroidissement. En effet, elles sont plongées dans un fluide caloporteur. La figure 3 montre de façon schématique le circuit de refroidissement. On voit que celui-ci comporte 2 pompes 8A et 8B et 2 radiateurs 80A et 80B. Les 2 pompes 8A et 8B sont montées en série et chacune est commandée par son propre moteur électrique 81A et 81 B respectivement. Chacun de ces moteurs électriques est piloté par sa propre électronique de commande 82A et 82B. Les radiateurs 80A et 80B sont montés en parallèle, et équipés de vannes 83 qui permettent d'isoler chacun des radiateurs sélectivement en cas de fuites à l'un d'eux. D'autre part, l'ensemble pompe et moteur d'actionnement de la pompe est dimensionné de telle façon que si l'une des pompes est en panne, l'autre pompe est capable d'assurer un débit suffisant du fluide caloporteur malgré le fait que l'autre pompe n'est plus fonctionnelle.

On décrit maintenant l'alimentation électrique basse tension des différentes électroniques de commande et des différents auxiliaires, à l'aide de la figure 3. Sur celle-ci, on reconnaît les modules électroniques de dissipation 60 A et 60B des deux résistances électriques de dissipation 6A et 6B, les modules électroniques de pilotage de roue 23 associés chacun à l'une des quatre machines électriques 2, le module électronique de récupération 50 associé au banc de super condensateurs 5. On voit également l'unité centrale 3, l'électronique de commande 82A de l'une des pompes du circuit de refroidissement et l'électronique de commande 82B de l'autre des pompes du circuit de refroidissement. La pédale de frein est supposée suffisamment sûre par sa construction et n'est donc pas doublée. Deux capteurs de position, C1 et C2, sont chacun associés à la pédale de frein et délivrent chacun un signal représentatif de la commande voulue par le conducteur du véhicule.

La redondance pour la fourniture de l'énergie électrique basse tension est conçue de la façon suivante. Puisque l'on dispose, d'une part, d'un convertisseur de tension 41 branché sur la ligne électrique de puissance 40 et délivrant une tension continue 12 volts et, d'autre part, d'une batterie 42 délivrant elle aussi une tension continue 12 volts, certains éléments vont être branchés sur le convertisseur de tension 41 et d'autres éléments vont être branchés sur la batterie 12 volts de la façon suivante. Une ligne 43 assure l'interconnexion entre le convertisseur de tension 41 et la batterie 42. Cette ligne 43 comporte un premier tronçon 43A et un second tronçon 43B, lesdits premier et second tronçons étant reliés par un dispositif de séparation électrique 430 des deux tronçons en cas de sous-tension ou de sur-intensité sur l'un d'entre eux. Ainsi, on voit que dans la réalisation non limitative illustrant l'invention, les deux tronçons 43A et 43B sont alimentés à la même tension électrique. Certains éléments sont branchés sur le premier tronçon 43A, chacun via un dispositif de protection contre les surintensités 434A. Certains autres éléments sont branchés sur le tronçon 43B, chacun via un dispositif de protection contre les surintensités 434B.

Par exemple, pour assurer le bon fonctionnement des pompes du circuit de refroidissement, l'un des moteurs 81A est branché sur le premier tronçon 43A via son électronique de commande 82A. L'autre des moteurs 81B est branché sur le second tronçon 43B via son électronique de commande 82B. Les électroniques de commande du sous-système A, à savoir le module électronique de pilotage de roue 23 associée à la machine électrique rotative 2 de la roue avant droite, le module électronique de pilotage de roue 23 associée à la machine électrique rotative 2 de la roue arrière gauche et le module électronique de dissipation 60A de la résistance de dissipation 6A sont branchés sur le second tronçon 43B alors que les mêmes électroniques du sous-système B sont branchés sont branchés sur le premier tronçon 43A.

L'unité centrale 3 assurant la gestion du déplacement du véhicule, puisqu'elle contrôle l'ensemble des modules électronique de pilotage de roue 23, bénéficie d'un double branchement électrique. Elle est branchée tout à la fois sur le premier tronçon 43A et le second tronçon 43B, via une paire de diodes isolant lesdits premier et second tronçons. L'unité centrale 3 est connectée chaque fois via une diode 435 de façon à assurer la continuité de l'alimentation électrique de l'unité centrale 3, même en cas de défaillance d'une des 2 sources basse tension. En outre, un circuits approprié 436 surveille la présence de tension électrique sur chacune des lignes d'alimentation afin d'envoyer un signal de défaut en cas de panne d'une des deux alimentations électriques. Le module électronique de récupération 50 associé au banc de super condensateurs 5 est branché sur le premier tronçon 43A uniquement. Notons que ce type de double branchement pourrait aussi être utilisé pour toutes les électroniques, notamment pour les modules électroniques de pilotage de roue 23.

Le dispositif 430 est constitué, par exemple, d'éléments de puissance tels que contacteurs ou composants électroniques de puissance, et d'un circuit de mesure et de commande. Dans le cas d'un défaut de type « circuit ouvert » sur l'un des deux tronçons 43A ou 43B, ou directement interne à l'une des alimentations basse tension 41 ou 42, le dispositif 430 maintient la connexion entre les deux tronçons 43A et 43B, la totalité de l'alimentation des modules électroniques et auxiliaires est alors assurée par l'alimentation basse tension restante. Dans ce cas, la totalité de la puissance de freinage est conservée.

Dans le cas d'une sous-tension ou d'une surintensité survenant par exemple suite à un court-circuit sur l'un des deux tronçons 43A ou 43B ou directement interne à l'une des alimentations 41 ou 42, le dispositif de séparation électrique 430 interrompt la connexion entre les deux tronçons 43A et 43B de manière à préserver la fonctionnalité du tronçon sans défaut. On voit donc que, si pour une raison quelconque, un défaut important sur le convertisseur de tension 41 conduit le dispositif de séparation électrique 430 à interrompre l'interconnexion entre le convertisseur de tension 41 et la batterie 42, celle-ci peut continuer à alimenter en basse tension les électroniques de commande associées au sous-système A et l'unité centrale ainsi que l'une des 2 pompes du circuit hydraulique de refroidissement. A l'inverse, dans le cas d'un défaut important du côté de la batterie 42, le dispositif de séparation électrique 430 peut interrompre l'interconnexion et le convertisseur de tension 41 peut continuer à alimenter le sous-système B, l'unité centrale et l'une des pompes du circuit hydraulique de refroidissement. On voit donc que l'architecture décrite permet de maintenir le fonctionnement de l'un des 2 sous-systèmes A ou B et l'on dispose donc encore de la moitié de la puissance de freinage du véhicule. Bien entendu, en utilisant le double branchement de l'alimentation électronique basse tension pour toutes les électroniques, on peut maintenir, même dans ce cas de défaut, la totalité de la puissance de freinage.

Décrivons maintenant l'alimentation des capteurs de freinage C1 et C2 qui sont à la source de la chaîne de commande de freinage. Rappelons que le système selon l'invention comporte une unité centrale 3 qui contrôle l'ensemble des modules électroniques de pilotage de roue 23. D'autre part, le système selon l'invention comporte une commande de freinage 32 à la disposition d'un conducteur, ladite commande étant reliée mécaniquement au moins à un premier capteur C1 délivrant un signal de commande du freinage du véhicule ayant une amplitude donnée représentative de la force totale de freinage souhaitée pour le véhicule, et à un deuxième capteur C2 délivrant un signal de commande du freinage du véhicule ayant une amplitude donnée représentative de la force.totale de freinage souhaitée pour le véhicule.

L'architecture du système selon l'invention a dévolu aux capteurs C1 et C2 un rôle différent. Le capteur C1 est alimenté en énergie électrique basse tension par l'unité centrale 3. Il délivre le signal de commande à l'unité centrale 3 et celle-ci ne reçoit le signal de commande de freinage que du capteur C1 pour créer les signaux de commande globale du freinage du véhicule d'un premier niveau. Signalons que l'unité centrale 3 comporte les circuits appropriés permettant de surveiller la présence de tension sur la ligne d'alimentation du capteur C1, ainsi que l'intégrité du signal de commande sur la ligne 30F, afin de gérer une information de défaut du circuit de conditionnement du capteur C1. Le second capteur C2 est alimenté par les modules électroniques de pilotage de roue 23 associés à chacune des machines électriques. Ledit deuxième capteur C2 délivre son signal de commande à chacun des modules électroniques de pilotage de roue 23. Bien entendu, une diode 230 est implantée dans la ligne d'alimentation entre chacune des électroniques de commande 23 et le capteur C2. En outre, un circuit approprié 231, dans chacun des modules de pilotage de roue 23, surveille la présence de tension électrique sur chacune des quatre lignes d'alimentation, afin d'envoyer un signal de défaut en cas de panne d'une des quatre alimentations électriques. On verra au paragraphe suivant que le capteur C2 est directement associé aux électroniques de pilotage de roue 23 et seulement aux électroniques de pilotage de roue 23.

On vient de voir que l'étage d'alimentation électriques basse tension comporte une première alimentation et au moins une deuxième alimentation, la première alimentation et la deuxième alimentation étant interconnectées par une ligne électrique 43 comportant un premier tronçon 43A et un second tronçon 43B, lesdits premier et second tronçons étant reliés par un dispositif de séparation électriques 430 des deux tronçons en cas de sous-tension ou de sur-intensité sur l'un d'entre eux. Ledit premier capteur C1 est alimenté par le même tronçon que l'unité centrale 3 et ledit deuxième capteur C2 est alimenté à la fois par une électronique de pilotage de roue 23 d'un (A) des sous-systèmes et par une électronique de pilotage de roue 23 de l'autre (B) des sous-systèmes via une paire de diodes isolant lesdites alimentations.

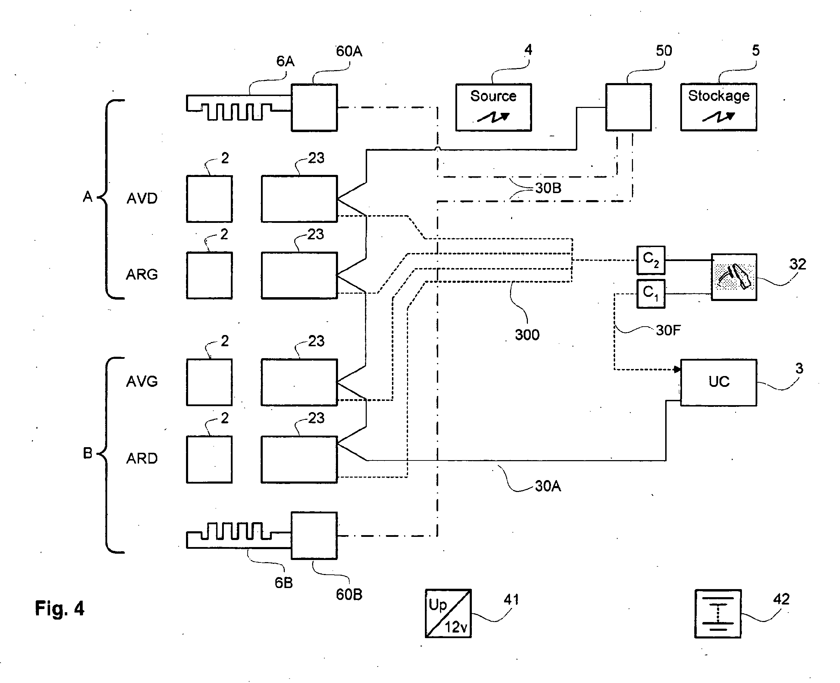

A la figure 4, on voit que l'unité centrale 3 est interconnectée avec chacun des modules électroniques de pilotage de roue 23 et avec le module électronique de récupération 50 par un bus CAN ® (Control Area Network, désigné par la référence 30A) permettant le transfert d'ordres de pilotage sous forme informatique. L'unité centrale 3 est chargée des logiciels adéquats pour pouvoir prendre en compte tous les paramètres souhaitables afin d'élaborer un signal de commande de freinage qui est envoyé aux différentes électroniques pilotant les machines électriques suivant les protocoles voulus pour circuler sur le bus CAN 30A. L'unité centrale 3 envoie ledit signal de manière cadencée sur le bus 30A avec une périodicité de l'ordre de 10 à 20 ms et chaque module électronique de pilotage roue 23 contrôle cette périodicité. Si pour une raison de dysfonctionnement du bus CAN, de l'unité centrale 3 ou du logiciel implanté, ou pour toute autre raison, cette périodicité n'est pas respectée, une information de défaut de communication CAN est générée. Chacun des modules électroniques de pilotage de roue 23 reçoit en outre directement des signaux analogiques délivrés par le capteur C2, cette fois via des lignes analogiques 300. Signalons également que chaque module de pilotage de roue 23 comporte les circuits appropriés permettant de surveiller l'intégrité du signal de commande sur la ligne 300, afin de gérer une information de défaut en cas de panne du circuit de conditionnement du capteur C2.

Enfin, des lignes de commande 30B relient le module électronique de récupération 50 aux modules électroniques de dissipation 60 A et 60B. En cas de défaut sur lesdites lignes de commande 30B ou sur le module électronique de récupération 50, les modules électroniques de dissipation 60A et 60B conservent la possibilité de dissiper la puissance de freinage qui remonte sur la ligne de puissance 40 de manière autonome, sans recevoir de commande sur la ligne 30B. Le principe des sous-ensembles A et B reste donc pleinement opérationnel pour le freinage mais sans possibilité de stocker l'énergie puisque dans cette dernière hypothèse, le module électroniques 50 de récupération est hors service.

Revenons à la création des couples freineurs par les machines électriques 2. Le pilotage des machines électriques 2 étant assuré directement par un module électronique de pilotage de roue 23 particulier à chacune des machines électriques 2. Celui-ci est chargé des logiciels adéquats pour piloter chaque machine électrique en couple selon les signaux de commande reçus. Chaque module électronique de pilotage de roue 23 reçoit des signaux de commande de freinage d'une part sur le bus 30A et d'autre part sur la ligne analogique 300 délivrant le signal du capteur C2. Chaque module électronique de pilotage de roue 23 peut donc comparer à tout moment le signal de commande délivré sur le bus 30A et le signal de commande délivré par la ligne analogique 300 et, dans une certaine marge de tolérance par exemple de l'ordre de 10 à 20 % selon des déterminations expérimentales, donner priorité au signal de commande de freinage en provenance du bus 30A. C'est le mode de fonctionnement normal.

En revanche, si pour une raison de dysfonctionnement de l'unité centrale 3 ou du logiciel implanté dans l'unité centrale 3, le signal de commande de freinage envoyé par le bus 30A était très inférieur au signal de commande de freinage provenant directement de façon analogique du capteur C2, priorité peut être donnée au signal de commande en provenance du capteur C2 pour assurer la sécurité de fonctionnement en freinage du véhicule. On voit que l'architecture proposée réalise une exploitation différente des signaux délivrés par chacun des capteurs C1 et C2. Le capteur C1 est associé à l'unité centrale 3 et permet de calculer un signal de freinage global de premier niveau. D'autre part, le signal de commande délivré par le capteur C2 est directement délivré par voie analogique par des lignes appropriées aux modules électroniques de pilotage de roue 23. Une cohérence globale est assurée en comparant les différents signaux. Le signal correspondant à une demande de décélération la plus élevée, dans une marge de tolérance choisie, a alors priorité. De la sorte, la sécurité dans la commande du freinage est assurée même en cas de défaillance du bus 30A, ou d'un tronçon du bus, ou de l'une quelconque des lignes analogiques 300 ou 30F.

En plus de tout ceci, on peut implanter une possibilité de créer un signal de freinage prédéterminé par une commande d'urgence au moyen par exemple d'un bouton d'urgence à la disposition du conducteur. Ce type de commande de freinage est pris en compte par l'unité centrale 3, plus précisément par le logiciel implanté dans l'unité centrale 3, et est acheminé aux électroniques de commande 23 de chacune des machines électriques par le bus CAN 30A. Ceci peut assurer une sécurité de fonctionnement au freinage même en cas de rupture de la pédale de frein. De même, ceci peut assurer une sécurité de fonctionnement au freinage en cas de rupture des 2 capteurs ou de rupture de la fixation des 2 capteurs de frein C2 et C2. Si seule la liaison mécanique de l'un des 2 capteurs C1 ou C2 ou l'un des 2 capteurs est défaillant, bien entendu la sécurité de fonctionnement en freinage est assurée comme expliqué au paragraphe précédent. Mais dans ce cas, on peut par exemple autoriser la fin du trajet et, après arrêt du véhicule, interdire son redémarrage.

Enfin, signalons que de préférence la redondance matérielle qui vient d'être exposée est utilisée en combinaison avec une redondance logicielle, avantageusement à la fois pour les logiciels chargés dans l'unité centrale 3 et ceux chargés dans les modules électroniques de pilotage de roue 23. De la sorte, on atteint un haut degré de sécurité du système de freinage pour véhicule par voie totalement électrique.

## Revendications

1. Système de freinage électrique d'un véhicule routier comportant :
quatre roues (1) chacune reliée en rotation à une machine électrique rotative (2) qui lui est propre et qui est pilotée par un module électronique de pilotage de roue (23), chaque module électronique de pilotage permettant d'imposer sélectivement à la roue considérée un couple de pilotage déterminé en amplitude et en signe,
deux sous-systèmes (A et B) chacun comportant au moins l'un des modules électroniques de pilotage de roue (23),
une ligne électrique de puissance centrale (40) connectée à un moyen d'alimentation en énergie électrique (4), chacun des sous-systèmes (A et B) étant relié à la ligne électrique de puissance centrale,
un étage d'alimentation électrique basse tension pour alimenter des électroniques de contrôle et de commande des éléments de puissance, ledit étage d'alimentation électrique basse tension comportant une première alimentation électrique basse tension (41) et au moins une deuxième alimentation électrique basse tension (42), la première alimentation et la deuxième alimentation étant interconnectées par une ligne électrique basse tension (43) comportant un premier tronçon (43A) et un second tronçon (43B), lesdits premier et second tronçons étant reliés par un dispositif de séparation électrique (430) des deux tronçons, capable d'interrompre l'interconnexion sur commande en cas de sous-tension ou de sur-intensité sur l'un d'entre eux, chaque module électronique de pilotage de roue (23) d'un des sous-systèmes (A) étant alimenté par le premier tronçon et chaque module électronique de pilotage de roue (23) de l'autre des sous-systèmes (B) étant alimenté par le second tronçon,
le système de freinage comportant pour chacun des sous-systèmes (A, B) un dispositif d'absorption de l'énergie électrique (6A, 6B) produite par l'ensemble des machines électriques au cours du freinage, chaque dispositif d'absorption de l'énergie électrique étant relié à la ligne électrique centrale (40) par un module électronique de dissipation (60A, 60B),
l'un (A) des modules électroniques de dissipation (60) étant alimenté par le premier tronçon (43A) et l'autre (B) des modules électroniques de dissipation (60) étant alimenté par le second tronçon (43B).

2. Système selon la revendication 1, comportant un dispositif de protection contre les surintensités (41A, 41B) capable d'isoler électriquement ledit sous-sytème de la ligne électrique centrale (40).

3. Système selon la revendication 1 ou 2, dans lequel ladite première alimentation est une batterie (42).

4. Système selon la revendication 1 ou 2, dans lequel une deuxième alimentation est formée par un convertisseur de tension (41) branché à une ligne électrique centrale (40).

5. Système selon l'une des revendications précédentes, comportant une unité centrale (3) assurant la gestion du déplacement du véhicule, ladite unité centrale (3) contrôlant l'ensemble des modules électroniques de pilotage de roue (23), alimentée par l'un desdits premier ou second tronçons.

6. Système selon l'une des revendications précédentes, comportant une unité centrale (3) assurant la gestion du déplacement du véhicule, ladite unité centrale (3) contrôlant l'ensemble des modules électroniques de pilotage de roue (23), alimentée à la fois par le premier tronçon et par le second tronçon via une paire de diodes isolant lesdits premier et second tronçons.

7. Système selon l'une des revendications précédentes, comportant une unité centrale (3) assurant la gestion du déplacement longitudinal du véhicule, ladite unité centrale (3) contrôlant l'ensemble des modules électroniques de pilotage de roue (23), comportant une commande de freinage (32) à la disposition d'un conducteur, ladite commande étant reliée mécaniquement au moins à un premier capteur (C1) délivrant un signal de commande du freinage du véhicule ayant une amplitude donnée représentative de la force totale de freinage souhaitée pour le véhicule, et à un deuxième capteur (C2) délivrant un signal de commande du freinage du véhicule ayant une amplitude donnée représentative de la force totale de freinage souhaitée pour le véhicule, dans lequel ledit premier capteur (C1) délivre son signal de commande à ladite unité centrale (3) et ledit deuxième capteur (C2) délivre son signal de commande à chacun des modules électroniques de pilotage de roue (23).

8. Système selon la revendication 7, dans lequel ledit premier capteur (C1) est alimenté par le même tronçon que l'unité centrale (3), ledit deuxième capteur (C2) étant alimenté à la fois par une électronique de pilotage de roue (23) d'un des sous-systèmes (A) et par une électronique de pilotage de roue (23) de l'autre des sous-systèmes (B) via une paire de diodes isolant lesdites alimentations.

9. Système de freinage d'un véhicule selon l'une des revendications précédentes, pour un véhicule à quatre roues, chacune reliée en rotation à au moins une machine électrique rotative (2) qui lui est propre, dans lequel chacun desdits sous-systèmes comporte deux desdites roues.

10. Système de freinage d'un véhicule selon la revendication 9 dans lequel chaque sous-système regroupe les roues du véhicule disposées en diagonale aux angles opposés du véhicule.

11. Système selon l'une des revendications précédentes, dans lequel chaque module électronique de dissipation (60) comporte un dispositif de dissipation comportant une résistance électrique de dissipation (6).

12. Système selon la revendication 11, pour véhicule de masse M kg, dans lequel le dispositif de dissipation est de puissance supérieure à 250*M/1000 kW par sous-système.

13. Système selon l'une des revendications 4 à 12, dans lequel chacun des sous-systèmes (A et B) est relié à la ligne électrique centrale (40) par un dispositif de protection contre les surintensités (41A et 41B), un moyen d'alimentation en énergie électrique étant connecté à la ligne électrique centrale (40).

14. Système selon l'une des revendications 4 à 13, dans lequel un dispositif de stockage d'énergie électrique est relié à la ligne électrique centrale (40) par un module électronique de récupération.

15. Système selon l'une des revendications précédentes, dans lequel les deux tronçons 43A et 43B sont alimentés à la même tension électrique.

## Patentansprüche

1. Elektrisches Bremssystem eines Straßenfahrzeugs, das Folgendes aufweist:
vier Räder (1), die jeweils in Drehung mit einer elektrischen Rotationsmaschine (2) verbunden sind, die jedem eigen ist und von einem elektronischen Radsteuermodul (23) gesteuert wird, wobei jedes elektronische Steuermodul es erlaubt, selektiv dem betreffenden Rad ein Steuerdrehmoment, das in Amplitude und Vorzeichen bestimmt ist, aufzuerlegen,
zwei Subsysteme (A und B), die jeweils mindestens eines der elektronischen Radsteuermodule (23) aufweisen,
eine zentrale elektrische Leistungsleitung (40), die mit einem Mittel zum Versorgen mit elektrischer Energie (4) verbunden ist, wobei jedes der Subsysteme (A und B) mit der zentralen elektrischen Leistungsleitung verbunden ist,
eine Niederspannungsversorgungssteuerstufe, um die Kontroll- und Steuerelektroniken der Leistungselemente zu versorgen, wobei die Niederspannungsversorgungssteuerstufe eine erste Niederspannungsversorgung (41) und mindestens eine zweite Niederspannungsversorgung (42) aufweist, wobei die erste und die zweite Versorgung miteinander durch eine Niederspannungsleitung (43) verbunden sind, die einen ersten Abschnitt (43A) und einen zweiten Abschnitt (43B) aufweist, wobei der erste und der zweite Abschnitt durch eine elektrische Trennvorrichtung (430) der zwei Abschnitte verbunden sind, die fähig ist, die gegenseitige Verbindung auf Befehl im Fall von Unterspannung oder Überstrom auf einem der beiden zu unterbrechen, wobei jedes elektronische Radsteuermodul (23) eines der Subsysteme (A) von dem ersten Abschnitt versorgt wird, und jedes elektronische Radsteuermodul (23) des anderen der Subsysteme (B) von dem zweiten Abschnitt versorgt wird,
wobei das Bremssystem für jedes der Subsysteme (A, B) eine Vorrichtung zur Absorption elektrischer Energie (6A, 6B), die von der Einheit der elektrischen Maschinen im Laufe des Bremsens erzeugt wird, aufweist, wobei jede Absorptionsvorrichtung der elektrischen Energie mit der zentralen elektrischen Leitung (40) durch ein elektronisches Dissipationsmodul (60A, 60B) verbunden ist, wobei eines (A) der elektronischen Dissipationsmodule (60) von dem ersten Abschnitt (43A) und das andere (B) der elektronischen Dissipationsmodule (60) von dem zweiten Abschnitt (43B) versorgt wird.

2. System nach Anspruch 1, das eine Vorrichtung zum Schutz vor Überstrom (41A, 41B) aufweist, die fähig ist, das Subsystem von der zentralen elektrischen Leitung (40) elektrisch zu isolieren.

3. System nach Anspruch 1 oder 2, bei dem die erste Versorgung eine Batterie (42) ist.

4. System nach Anspruch 1 oder 2, bei dem eine zweite Versorgung von einem Spannungswandler (41), der an eine zentrale elektrische Leitung (40) angeschlossen ist, gebildet ist.

5. System nach einem der vorhergehenden Ansprüche, das eine Zentraleinheit (3) aufweist, die die Verwaltung des Fahrens des Fahrzeugs sicherstellt, wobei die Zentraleinheit (3) die Einheit der elektronischen Radsteuermodule (23), die entweder von dem ersten oder von dem zweiten Abschnitt versorgt wird, steuert.

6. System nach einem der vorhergehenden Ansprüche, das eine Zentraleinheit (3) aufweist, die die Verwaltung des Fahrens des Fahrzeugs sicherstellt, wobei die Zentraleinheit (3) die Einheit der elektronischen Radsteuermodule (23) steuert, die sowohl von dem ersten Abschnitt als auch von dem zweiten Abschnitt über ein Paar Dioden versorgt wird, die den ersten und den zweiten Abschnitt isolieren.

7. System nach einem der vorhergehenden Ansprüche, das eine Zentraleinheit (3) aufweist, die die Verwaltung des Längsfahrens des Fahrzeugs sicherstellt, wobei die Zentraleinheit (3) die Einheit der elektronischen Radsteuermodule (23) steuert, die eine Bremssteuerung (32) aufweist, die einem Fahrer zur Verfügung steht, wobei die Steuerung mechanisch mit mindestens einem ersten Sensor (C1) verbunden ist, der ein Steuersignal des Bremsens des Fahrzeugs liefert, das eine gegebene Amplitude hat, die für die für das Fahrzeug gewünschte Gesamtbremskraft repräsentativ ist, und einen zweiten Sensor (C2), der ein Steuersignal des Bremsens des Fahrzeugs liefert, das eine gegebene Amplitude hat, die für die für das Fahrzeug gewünschte Gesamtbremskraft repräsentativ ist, wobei der erste Sensor (C1) sein Steuersignal der Zentraleinheit (3) liefert und der zweite Sensor (C2) sein Steuersignal jedem der elektronischen Radsteuermodule (23) liefert.

8. System nach Anspruch 7, bei dem der erste Sensor (C1) von demselben Abschnitt wie die Zentraleinheit (3) versorgt wird, wobei der zweite Sensor (C2) sowohl von einer Radsteuerelektronik (23) eines der Subsysteme (A) als auch von einer Radsteuerelektronik (23) des anderen der Subsysteme (B) über ein Paar Dioden, die die Versorgungen isolieren, versorgt wird.

9. Bremssystem eines Fahrzeugs nach einem der vorhergehenden Ansprüche, für ein Fahrzeug mit vier Rädern, die jeweils in Drehung mit mindestens einer elektrischen Rotationsmaschine (2), die jedem eigen ist, verbunden sind, wobei jedes der Subsysteme zwei der Räder aufweist.

10. Bremssystem eines Fahrzeugs nach Anspruch 9, bei dem jedes Subsystem die Räder des Fahrzeugs, die in der Diagonale zu den gegenüberliegenden Winkeln des Fahrzeugs angeordnet sind, gruppiert.

11. System nach einem der vorhergehenden Ansprüche, bei dem jedes elektronische Dissipationsmodul (60) eine Dissipationsvorrichtung aufweist, die einen elektrischen Dissipationswiderstand (6) aufweist.

12. System nach Anspruch 11, für ein Fahrzeug mit Masse M kg, bei dem die Dissipationsvorrichtung eine Leistung hat, die größer ist als 250*M/1000 kW pro Subsystem.

13. System nach einem der Ansprüche 4 bis 12, bei dem jedes der Subsysteme (A und B) mit der zentralen elektrischen Leitung (40) durch eine Schutzvorrichtung gegen Überstrom (41A und 41B) verbunden ist, wobei ein Mittel zur Versorgung mit elektrischer Energie mit der zentralen elektrischen Leitung (40) verbunden ist.

14. System nach einem der Ansprüche 4 bis 13, bei dem eine Speichervorrichtung elektrischer Energie mit der zentralen elektrischen Leitung (40) durch ein elektronisches Rückgewinnungsmodul verbunden ist.

15. System nach einem der vorhergehenden Ansprüche, bei dem die zwei Abschnitte 43A und 43B mit derselben elektrischen Spannung versorgt sind.

## Claims

1. Electric braking system for a road vehicle comprising:
four wheels (1), each connected for rotation to a rotary electric machine (2) which is specific to each wheel and which is controlled by an electronic wheel control module (23), each electronic control module making it possible to impart selectively to the wheel in question a control torque of determined amplitude and sign,
two sub-systems (A and B) each comprising at least one of the electronic wheel control modules (23),
a central electric power line (40) connected to a means of electrical energy supply (4), each of the subsystems (A and B) being linked to the central electrical power line,
a low-voltage electrical supply stage for supplying electronics for controlling and driving the power elements, said low-voltage electrical supply stage comprising a first low-voltage electrical supply (41) and at least one second low-voltage electrical supply (42), the first supply and the second supply being interconnected by a low-voltage electric line (43) comprising a first section (43A) and a second section (43B), said first and second sections being connected by a device (430) that electrically separates the two sections, capable of interrupting the interconnection on demand in the event of one of them experiencing an undervoltage or an overcurrent, each electronic wheel control module (23) of one of the sub-systems (A) being supplied by the first section and each electronic wheel control module (23) of the other of the sub-systems (B) being supplied by the second section, the braking system comprising for each of the subsystems (A, B) a device for absorbing the electrical energy (6A, 6B) produced by the set of electric machines in the course of braking, each device for absorbing electrical energy being linked to the central electrical line (40) by an electronic dissipation module (60A, 60B), one (A) of the electronic dissipation modules (60) being supplied by the first section (43A) and the other (B) of the electronic dissipation modules (60) being supplied by the second section (43B).

2. System according to Claim 1, comprising an overcurrent protection device (41A, 41B) capable of electrically isolating said sub-system from the central electric line (40).

3. System according to Claim 1 or Claim 2, in which said first supply is a battery (42).

4. System according to Claim 1 or Claim 2, in which a second supply takes the form of a voltage converter (41) connected to a central electric line (40).

5. System according to one of the preceding claims, comprising a central unit (3) ensuring management of vehicle displacement, said central unit (3) controlling all the electronic wheel control modules (23) and being supplied by one of said first or second sections.

6. System according to one of the preceding claims, comprising a central unit (3) ensuring management of vehicle displacement, said central unit (3) controlling all the electronic wheel control modules (23) and being supplied by both the first and the second section via a pair of diodes isolating said first and second sections.

7. System according to one of the preceding claims, comprising a central unit (3) ensuring management of longitudinal vehicle displacement, said central unit (3) controlling all the electronic wheel control modules (23), comprising a braking control (32) available to a driver, said control being connected mechanically at least to a first sensor (C1) outputting a vehicle braking control signal having a given amplitude representing the total braking force desired for the vehicle, and to a second sensor (C2) outputting a vehicle braking control signal having a given amplitude representing the total braking force desired for the vehicle, in which system said first sensor (C1) outputs its control signal to said central unit (3) and said second sensor (C2) outputs its control signal to each of the electronic wheel control modules (23).

8. System according to Claim 7, in which said first sensor (C1) is supplied by the same section as the central unit (3), said second sensor (C2) being supplied both by wheel control electronics (23) of one of the sub-systems (A) and by wheel control electronics (23) of the other of the sub-systems (B) via a pair of diodes isolating said supplies.

9. Vehicle braking system according to one of the preceding claims, for a vehicle with four wheels, each connected for rotation to at least one rotary electric machine (2) specific thereto, in which system each of said sub-systems comprises two of said wheels.

10. Vehicle braking system according to Claim 9, in which each sub-system groups together the wheels of the vehicle disposed diagonally at opposite corners of the vehicle.

11. System according to one of the preceding claims, in which each electronic dissipation module (60) comprises a dissipator comprising an electrical dissipation resistor (6).

12. System according to Claim 11, for a vehicle of a mass of M kg, in which the dissipator is of a power greater than 250*M/1000 kW per sub-system.

13. System according to one of Claims 4 to 12, in which each of the sub-systems (A and B) is connected to the central electric line (40) by an overcurrent protection device (41A and 41B), a means for supplying electrical energy being connected to the central electric line (40).

14. System according to any one of Claims 4 to 13, in which an electrical energy storage device is connected to the central electric line (40) by an electronic regeneration module.

15. System according to one of the preceding claims, in which the two sections 43A and 43B are supplied at the same voltage.
